# FASCICULE DE BREVET EUROPEEN

(11) **EP 2 983 982 B1**
(45) Date de publication et mention de la délivrance du brevet: **29.03.2017**
(21) Numéro de dépôt: 14708288.7
(22) Date de dépôt: 07.03.2014
(51) Int. Cl.: B63C 11/22, B01D 53/04, B63C 11/24, A62B 31/00

(54) **SYSTEME DE RESPIRATION EN CIRCUIT FERME POUR PLONGEUR**
GESCHLOSSENES ATMUNGSSYSTEM FÜR TAUCHER
CLOSED CIRCUIT RESPIRATION SYSTEM FOR DIVER

(30) Priorité: 13.03.2013 FR 1352234
(43) Date de publication de la demande: 17.02.2016
(73) Titulaire: Visit Seabed France, 06299 Nice Cedex 3 (FR)
(72) Inventeur: CASTELLANET, Frédéric, F-75002 Paris (FR)
(74) Mandataire: Mazabraud, Xavier
(86) Numéro de dépôt international: PCT/EP2014/054435
(87) Numéro de publication internationale: WO 2014/139880

(56) Documents cités:
- EP-A1- 1 316 331
- WO-A1-01/83294
- DE-A1- 19 816 373
- US-A1- 2012 160 098

## Description

L'invention concerne un recycleur à adsorption de gaz carbonique, destiné à la plongée en circuit fermé.

Lors d'une plongée sous-marine utilisant un scaphandre autonome, le plongeur respire de l'air ou un mélange de gaz provenant de bouteilles dans lesquelles les gaz sont stockés à haute pression et qui lui sont fournis à la pression ambiante par un détendeur. Le mélange expiré est rejeté dans l'eau. Or le plongeur n'a consommé qu'une fraction du dioxygène présent dans l'air ou le mélange, et le dioxygène non consommé est rejeté dans l'eau. Ce système limite donc la durée d'une plongée. D'autre part, dans certaines applications la formation de bulles est rédhibitoire.

La demande européenne EP1316331 A1 décrit un système de respiration en circuit fermé pour plongeur. Il s'agit d'un système d'extraction du gaz carbonique comportant au moins un réservoir contenant un matériau apte à adsorber le gaz carbonique.

Les respirateurs à circuit fermé comportent une cartouche traversée par le mélange expiré et contenant un matériau tel que la chaux qui piège le gaz carbonique au cours d'une réaction irréversible. Ce système est peu pratique car la cartouche est encombrante et il ne permet pas la régénération de la chaux carbonatée, notamment en cours de plongée. L'invention vise à fournir une alternative à ce système.

A cet effet, elle propose un système de respiration en circuit fermé pour plongeur suivant la première revendication.

L'invention repose sur l'utilisation d'un matériau qui adsorbe le gaz carbonique au cours d'une réaction réversible, tel que des zéolithes, du charbon actif ou autre. Ce matériau est contenu dans un réservoir doté de moyens de chauffage, par exemple une résistance électrique. Le système comprend en outre un moyen de stockage d'énergie électrique tel qu'une batterie ou une pile, et un circuit électronique de contrôle qui déclenche la régénération du matériau par chauffage du réservoir lorsqu'une condition est remplie. La réaction d'adsorption étant réversible, le gaz carbonique se sépare du matériau, est évacué, et le matériau peut être réutilisé.

Les avantages sont les suivants :
- Gain de volume et donc gain de poids compensateur pour la plongée, car la cartouche de chaux est encombrante,
- Plus de nécessité de changer la chaux à chaque utilisation, car en l'absence de possibilité de régénération et de critère fiable de taux d'utilisation de la chaux, il est plus prudent de changer tout le contenu de la cartouche,
- La chaux est un matériau polluant qui, réglementairement, nécessite une incinération,
- Possibilité, comme on le verra plus bas, de régénérer le matériau en cours de plongée, la quantité de matériau emporté ne limitant dès lors plus la durée de la plongée comme c'est le cas avec la chaux.

Dans tout le texte, par mélange épuré on entend un mélange de gaz au moins partiellement épuré de gaz carbonique.

Avantageusement, chaque réservoir peut comporter en outre une vanne d'entrée du mélange, une vanne de sortie du mélange épuré et une vanne de sortie du gaz carbonique, et ledit circuit électronique de contrôle est prévu pour provoquer la fermeture desdites vannes d'entrée du mélange et de sortie du mélange épuré et l'ouverture de la vanne de sortie du gaz carbonique lorsqu'il provoque le chauffage d'un réservoir.

Dans la phase de désorption, les vannes d'entrée du mélange et de sortie du mélange épuré du réservoir sont fermées, seule la vanne de sortie du gaz carbonique est ouverte.

La sortie du gaz carbonique est distincte de celle du mélange épuré pour ne pas risquer de fournir du gaz carbonique à l'utilisateur.

Avantageusement, le système peut comporter en outre au moins un moyen de mesure d'au moins un paramètre caractérisant l'environnement dans lequel se trouve ledit système, et ladite condition porte sur au moins un paramètre environnemental.

La condition mentionnée plus haut peut bien sûr être l'activation du système par l'utilisateur, mais avantageusement le système peut être prévu pour détecter une condition par exemple environnementale dans laquelle il déclenche automatiquement la régénération du matériau, le système comportant alors des capteurs de paramètres d'environnement.

Par exemple, l'au moins un moyen de mesure peut comprendre un capteur de pression et/ou un capteur de présence d'eau, ladite condition pouvant porter sur la pression et/ou sur la présence d'eau.

La mesure de la pression et de présence d'eau permet de discriminer les situations « en plongée » et « en surface », donc de déclencher la régénération automatiquement après le retour en surface du plongeur.

Avantageusement, le système peut comporter un premier et un second réservoirs contenant chacun un matériau apte à adsorber le gaz carbonique, chaque réservoir comportant en outre une vanne d'entrée du mélange, une vanne de sortie d'un mélange épuré et une vanne de sortie du gaz carbonique, et pouvant comporter en outre :
- un moyen de chauffage dudit matériau associé à chaque réservoir,
- un circuit électronique de contrôle,
ledit circuit électronique de contrôle étant prévu pour provoquer dans chaque réservoir des cycles comprenant une période d'adsorption et une période de désorption, lesdits cycles étant en opposition de phase, de sorte que l'un des réservoirs est en adsorption pendant que l'autre est en désorption.

Dans ce mode de réalisation, le système d'extraction comporte deux réservoirs tels que décrits plus haut, comportant chacun un moyen de chauffage, et un circuit électronique de contrôle qui permet un fonctionnement alterné du système : le premier et le second réservoirs fonctionnant chacun selon des cycles comportant une période d'adsorption et une période de désorption, ces cycles étant en opposition de phase, de façon qu'il n'y ait toujours qu'un seul réservoir en réchauffage, donc en désorption, l'autre étant en adsorption, donc utilisé pour la respiration. Ceci permet d'obtenir un fonctionnement en continu du système d'extraction. Dans tous les cas, il y a un réservoir non chauffé en adsorption et un réservoir en chauffage donc en désorption, sauf éventuellement au début de la plongée lorsque les deux réservoirs contiennent du matériau « neuf » et en fin de plongée lorsque le système peut régénérer le matériau d'un réservoir alors que l'autre n'est plus en service.

Dans un mode de réalisation, le système d'extraction peut comporter en outre une horloge, le changement de période s'effectuant lors de la réalisation d'une condition de durée.

Dans ce cas, la bascule, c'est-à-dire le passage d'une période d'adsorption à une période de désorption, est réglée par une horloge. La durée de chauffage d'un réservoir est ajustée en fonction de la quantité de matériau contenu dans ce réservoir.

Dans un autre mode de réalisation, le système peut comporter en outre au moins un capteur de concentration en gaz carbonique, le changement de période s'effectuant lors de la réalisation d'une condition de concentration de gaz carbonique dans le mélange épuré.

Dans ce cas, la bascule s'effectue lorsque le capteur de gaz carbonique mesure une concentration supérieure à un seuil fixé à l'avance dans le mélange épuré en sortie d'un réservoir. Le système peut comporter un tel capteur en sortie de chaque réservoir, ou un unique capteur monté sur le circuit de mélange épuré sachant que le gaz carbonique en cours de désorption s'évacue des réservoirs par des sorties de purge spécifiques.

Avantageusement, les périodes d'adsorption du premier et du second réservoirs peuvent posséder un recouvrement.

Pour des raisons de sécurité, les périodes d'adsorption des réservoirs peuvent présenter un léger recouvrement afin d'assurer une continuité de la fourniture de mélange respirable au plongeur.

Avantageusement, le système peut être inclus dans un bloc de résine.

De cette façon, le circuit électronique de contrôle et la batterie sont à l'abri du contact avec l'eau. La batterie est du type qui se recharge par induction.

Lorsque le système d'extraction comporte un ou des capteur(s), ceux-ci sont montés soit affleurant à la surface du bloc de résine et de façon étanche (capteur d'humidité ou de présence d'eau), soit inclus dans ce bloc mais très proche de la surface (capteur de pression).

L'invention porte sur un système de respiration en circuit fermé pour plongeur, comportant un embout respiratoire muni d'un tuyau d'inspiration et un tuyau d'expiration, un sac respiratoire relié audit tuyau d'inspiration, une bouteille renfermant du dioxygène comprimé pour l'introduction de dioxygène dans ledit sac respiratoire et pouvant comporter un système d'extraction du gaz carbonique selon l'invention, dont l'entrée est reliée audit tuyau d'expiration et dont la sortie est reliée audit sac respiratoire. Un système de respiration en circuit fermé comporte un circuit primaire conduisant le mélange expiré par le plongeur vers l'entrée d'un système d'extraction, et un circuit secondaire connecté sur la sortie du système d'extraction et conduisant le mélange épuré vers le sac respiratoire. Le système de respiration comporte également une bouteille de dioxygène comprimé qui libère du dioxygène dans le sac respiratoire. Le plongeur respire à partir de ce sac respiratoire.

Le mode de fonctionnement diffère selon que le système d'extraction du gaz carbonique comporte un ou deux réservoirs.

Lorsque le système d'extraction du gaz carbonique comporte un réservoir, dans une première phase, le plongeur utilise le système de respiration de façon classique. Dans une seconde phase, le matériau contenu dans le réservoir est en cours de régénération, le plongeur ne peut plus utiliser le système de respiration, il doit attendre la fin de la désorption du gaz carbonique.

Le changement de phase de fonctionnement s'effectue soit à la demande de l'utilisateur, soit à la réalisation d'une condition, cette condition pouvant être le retour à la surface du plongeur. De cette façon, le plongeur n'a pas à se préoccuper de lancer la régénération du matériau adsorbant.

Lorsque le système d'extraction du gaz carbonique comporte deux réservoirs montés en parallèle dans le circuit de respiration, ces réservoirs sont alternativement en service, c'est-à-dire alternativement traversés par le mélange expiré par le plongeur et en régénération, de façon qu'un réservoir soit en service pendant que l'autre est en régénération. De cette façon, le système de respiration peut fonctionner en continu, la durée de la plongée n'est plus limitée par la saturation d'un matériau d'extraction du gaz carbonique mais par la capacité de la batterie.

Des modes de réalisation et des variantes seront décrits ci-après, à titre d'exemples non limitatifs, avec référence aux dessins annexés dans lesquels :
La figure 1 représente schématiquement un système d'extraction du gaz carbonique selon l'invention ;
La figure 2 représente schématiquement un deuxième mode de réalisation d'un système d'extraction du gaz carbonique selon l'invention ;
La figure 3 représente schématiquement les cycles d'adsorption et de régénération du système d'extraction du gaz carbonique de la figure 2 ;
La figure 4 représente schématiquement un système de respiration en circuit fermé pour plongeur utilisant un système d'extraction du gaz carbonique selon l'invention.

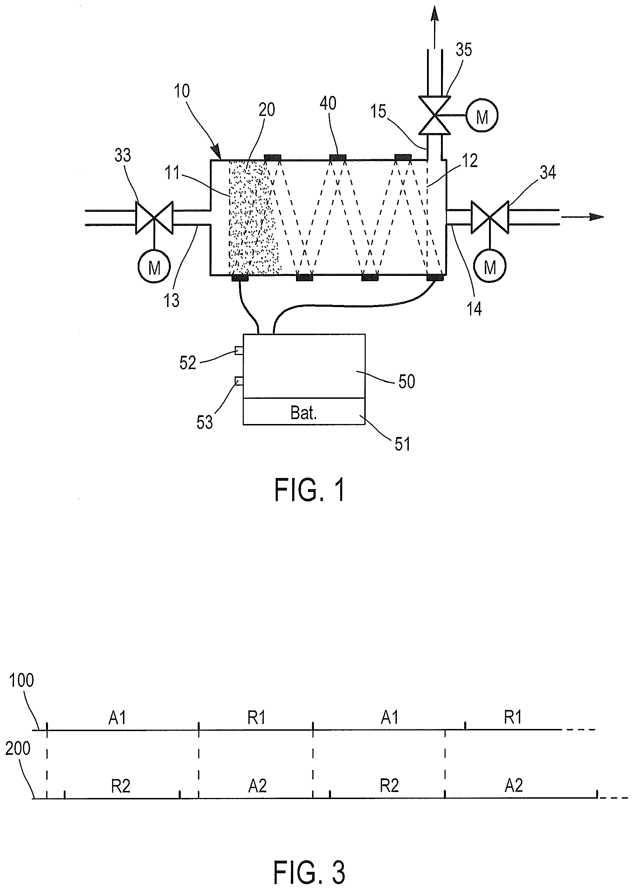

La figure 1 illustre schématiquement un système d'extraction du gaz carbonique d'un mélange de gaz, comprenant un réservoir 10 (représenté en coupe partiellement rempli pour des raisons de clarté du dessin) contenant un matériau 20 ayant la capacité d'adsorber le gaz carbonique, tel que des zéolithes, du charbon actif ou autre, maintenu entre deux grilles transversales 11 et 12. Ce réservoir comprend :
- une entrée 13 pour le mélange comportant du gaz carbonique ; cette entrée est contrôlée par une vanne motorisée 33,
- une sortie 14 pour le mélange épuré, c'est-à-dire duquel la majeure partie du gaz carbonique a été enlevée ; cette sortie est contrôlée par une vanne motorisée 34,
- une sortie de purge 15 pour l'évacuation du gaz carbonique lors des phases de régénération ; cette sortie de purge est contrôlée par une vanne motorisée 35.

Une résistance électrique 40 entoure le récipient 10 de façon à chauffer le matériau 20 pendant les phases de régénération. D'autres dispositions sont bien entendu possibles, par exemple une résistance plongée au sein du matériau.

La résistance 40 est reliée à une batterie 51 par l'intermédiaire d'un circuit électronique de contrôle 50. Les moteurs des vannes 33, 34, 35 sont également reliés au circuit électronique de contrôle (non représenté).

Ce système comporte deux modes de fonctionnement bien distincts contrôlés par le circuit électronique 50 :
- Dans un premier mode, le système est utilisé pour extraire le gaz carbonique d'un mélange de gaz, par exemple le mélange expiré par un plongeur, et le renvoyer vers le sac respiratoire du plongeur ; dans ce premier mode, les vannes d'entrée 33 et de sortie 34 sont ouvertes, la vanne de sortie de purge 25 est fermée et la résistance 40 n'est pas alimentée,
- Dans un second mode, le système est utilisé pour régénérer le matériau qui a adsorbé le gaz carbonique ; dans ce second mode, les vannes d'entrée 33 et de sortie 34 sont fermées, la vanne de sortie de purge 25 est ouverte et la résistance 40 est alimentée. La durée et l'intensité du chauffage sont fonction de la nature et de la quantité de matériau présent dans le réservoir 10. Le gaz carbonique s'évacue par la sortie de purge 15 ; celle-ci est munie d'un clapet anti-retour pour éviter par exemple que de l'eau pénètre dans le réservoir 10. Dans ce second mode, le système ne peut bien sûr pas être utilisé pour respirer.

Le système peut comporter un ou des capteurs permettant au circuit électronique de contrôle 50 de détecter la fin d'une plongée et de déclencher automatiquement la phase de régénération, par exemple un capteur de pression 52 et un capteur de présence d'eau 53 reliés audit circuit électronique. Une situation de plongée sera caractérisée par :
Présence d'eau et pression > 1 bar,
et la situation de surface sera caractérisée par :
Absence d'eau et pression < 1,2 bar.

Le détecteur de présence d'eau peut utiliser différentes propriété, par exemple la conductivité, la célérité du son...

Cet automatisme est associé à un dispositif de sécurité pour qu'un cycle de régénération ne se déclenche pas de manière intempestive pendant une plongée, par exemple une temporisation. De même, l'alimentation de la résistance 40 peut être conditionnée au retour d'information que les vannes 33 et 34 sont effectivement fermées et la vanne 35 effectivement ouverte.

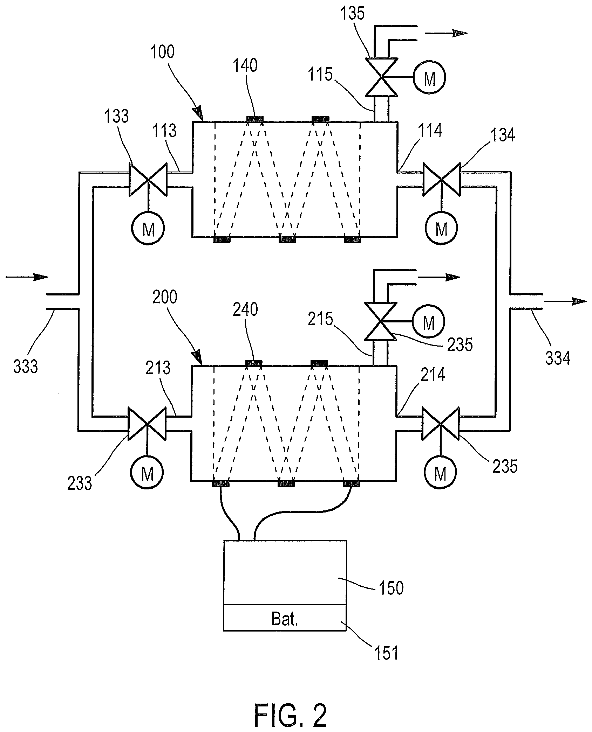

La figure 2 illustre un système d'extraction du gaz carbonique comportant deux réservoirs 100, 200 identiques au réservoir précédemment décrit, c'est-à-dire comportant chacun une entrée 113, 213 et une sortie 114, 214, ainsi qu'une sortie de purge 115, 215. Chaque entrée ou sortie est commandée par une vanne motorisée respective 133, 233, 134, 234, 135, 235.

Les deux réservoirs 100, 200 sont connectés en parallèle par des canalisations, de façon à présenter une entrée commune 333 pour le mélange chargé en gaz carbonique, et une sortie commune 334 pour le mélange épuré du gaz carbonique. Les sorties de purge 115, 215 peuvent rester indépendantes comme illustré en figure 2 ou être réunies en une sortie de purge commune.

Les réservoirs 100, 200 comportent chacun une résistance électrique 140, 240 permettant de chauffer le matériau contenu dans ces réservoirs ; ces résistances sont reliées à une batterie électrique 151 par l'intermédiaire d'un circuit électrique de commande 150 (non représenté pour la résistance 140).

Les moteurs des vannes 133, 233, 134, 234, 135, 235 sont également reliés au circuit électronique de commande (non représenté).

Ce système fonctionne selon un système de bascule dans lequel l'un des réservoirs est en adsorption pendant que l'autre est en régénération, la bascule étant gérée par le circuit électronique 150. Ainsi :
- Réservoir 100 en adsorption et réservoir 200 en régénération : vannes 133 et 134 ouvertes, vanne 135 fermée, vannes 233 et 234 fermées, vanne 235 ouverte, résistance 140 hors fonction, résistance 240 alimentée,
- Réservoir 100 en régénération et réservoir 200 en adsorption : vannes 133 et 134 fermées, vanne 135 ouverte, vannes 233 et 234 ouvertes, vanne 235 fermée, résistance 140 alimentée, résistance 240 hors fonction.

Bien entendu les vannes 233 et 233, ainsi que les vannes 234 et 234, peuvent être remplacées par une vanne trois voies.

La bascule est commandée par le circuit électronique 150 en fonction :
- D'une durée, la durée des phases de régénération devant être sensiblement égales entre elles et égales d'un réservoir à l'autre, et devant être inférieures ou égales en durée aux phases d'adsorption,
- D'une concentration en gaz carbonique mesurée en sortie 114, 214 de chaque réservoir.

Comme précédemment, ce système peut être doté de capteurs de présence d'eau et/ou de pression pour détecter le début de plongée (mise en service) et la fin de plongée (arrêt du système après une dernière régénération).

A noter que pour des raisons de sécurité, on peut prévoir un léger recouvrement des phases d'adsorption comme illustré en figure 3 : la ligne 100 illustre le cycle du réservoir 100, la ligne 2 le cycle du réservoir 200. Les phases d'adsorption, pendant lesquelles le réservoir correspondant sert à alimenter le plongeur en mélange, sont notées A1 et A2 ; les phases de régénération sont notées R1 et R2. On voit que les phases A1 et A2 sont en léger recouvrement lors de la bascule. Ceci permet notamment d'éviter de fournir un mélange trop chaud plongeur ; en effet, à la fin d'un cycle de régénération R1, R2, le réservoir est chaud et le mélange expurgé de CO2 qu'il fournit au début d'une phase d'adsorption A1, A2 va être chaud; le recouvrement permet de mélanger les gaz fournis par les deux réservoirs et donc de baisser sa température.

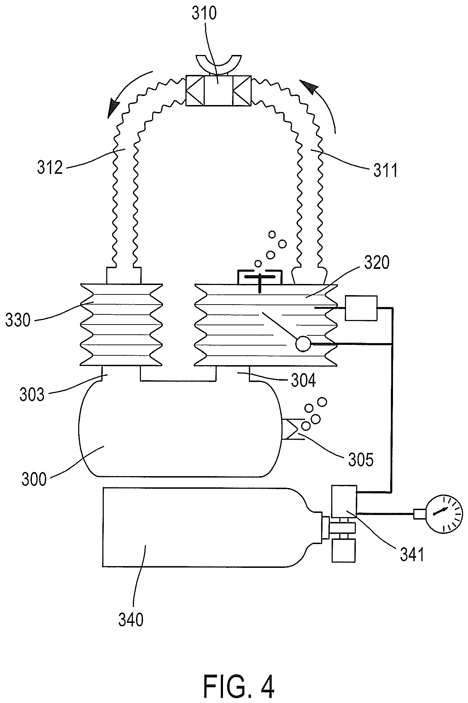

La figure 4 représente un système de respiration en circuit fermé pour plongeur comportant un système d'épuration du gaz carbonique 300 selon l'invention, par exemple noyé dans un bloc de résine. Comme décrit plus haut, ce système d'épuration comporte un ou deux réservoirs, remplis d'un matériau apte à adsorber le gaz carbonique, un circuit électronique de contrôle et une batterie.

Le système de respiration comporte de façon classique un embout 310 muni de soupapes, relié à deux tuyaux annelés, un tuyau d'inspiration 311 et un tuyau d'expiration 312. Le tuyau d'expiration 312 délivre un mélange chargé en gaz carbonique dans un sac d'expiration 330, relié à l'entrée 303 du système d'épuration 300. Cependant le tuyau d'expiration 312 pourrait être relié directement au système d'épuration.

Le système d'épuration 300 délivre un mélange épuré par sa sortie 304 à un sac inspiratoire 320. En phase de désorption du système d'épuration 300, le gaz carbonique s'échappe par une sortie 305.

Une bouteille de gaz comprimé 340 comprenant du dioxygène délivre par le biais d'un détendeur 341 du dioxygène dans un sac inspiratoire 320, de façon à reconstituer un mélange respirable par le plongeur. Le tuyau d'inspiration 311 est relié au sac d'inspiration 320 et délivre un mélange respirable pour le plongeur par l'embout 310.

## Revendications

1. Système de respiration en circuit fermé pour plongeur, comprenant un embout respiratoire (310) muni d'un tuyau d'inspiration (311) et un tuyau d'expiration (312), un sac inspiratoire (320) relié audit tuyau d'inspiration, une bouteille (340) renfermant du dioxygène comprimé pour l'introduction de dioxygène dans ledit sac inspiratoire,
**caractérisé en ce qu'**il comprend en outre
un système d'extraction du gaz carbonique (300) dont l'entrée (303) est reliée audit tuyau d'expiration (312) et dont la sortie (304) est reliée audit sac inspiratoire (320), ledit système d'extraction du gaz carbonique comportant au moins un réservoir (10) contenant un matériau (20) apte à adsorber le gaz carbonique, chaque réservoir comportant une entrée (13, 113, 213) pour ledit mélange et une sortie (14, 114, 214) pour un mélange au moins partiellement épuré du gaz carbonique, et, en outre :
- au moins un moyen de chauffage (40, 140, 240) dudit réservoir,
- au moins un circuit électronique de contrôle (50, 150), prévu pour provoquer le chauffage d'au moins un réservoir lorsqu'au moins une condition est remplie, de façon à provoquer la désorption du gaz carbonique adsorbé sur le matériau contenu dans le réservoir respectif.

2. Système de respiration selon la revendication 1,
**caractérisé en ce que** chaque réservoir comporte en outre une vanne d'entrée (33, 133, 233) du mélange, une vanne de sortie (34, 134, 234) du mélange épuré et une vanne de sortie (35, 135, 235) du gaz carbonique, et **en ce que** ledit circuit électronique de contrôle (50, 150) est prévu pour provoquer la fermeture desdites vannes d'entrée du mélange et de sortie du mélange épuré et l'ouverture de la vanne de sortie du gaz carbonique lorsqu'il provoque le chauffage d'un réservoir.

3. Système de respiration selon l'une des revendications 1 ou 2,
**caractérisé en ce qu'**il comporte en outre au moins un moyen de mesure (52, 53) d'au moins un paramètre caractérisant l'environnement dans lequel se trouve ledit système, et **en ce que** ladite condition porte sur au moins un paramètre environnemental.

4. Système de respiration selon la revendication 3,
**caractérisé en ce que** l'au moins un moyen de mesure comprend un capteur de pression (52) et/ou un capteur de présence d'eau (53), et **en ce que** ladite condition porte sur la pression et/ou sur la présence d'eau.

5. Système de respiration selon l'une des revendications 1 ou 2, **caractérisé en ce qu'**il comporte un premier et un second réservoirs (100, 200) et **en ce que** ledit circuit électronique de contrôle (150) est prévu pour provoquer dans chaque réservoir des cycles comprenant une période d'adsorption et une période de désorption, lesdits cycles étant en opposition de phase, de sorte que l'un des réservoirs est en adsorption pendant que l'autre est en désorption.

6. Système de respiration selon la revendication 5,
**caractérisé en ce qu'**il comporte en outre une horloge, et **en ce que** le changement de période s'effectue lors de la réalisation d'une condition de durée.

7. Système de respiration selon la revendication 5,
**caractérisé en ce qu'**il comporte en outre au moins un capteur de concentration en gaz carbonique, et **en ce que** le changement de période s'effectue lors de la réalisation d'une condition de concentration de gaz carbonique dans le mélange épuré.

8. Système de respiration selon l'une des revendications 5 à 7,
**caractérisé en ce que** les périodes d'adsorption (A1, A2) du premier et du second réservoirs possèdent un recouvrement.

9. Système de respiration selon l'une des revendications précédentes,
**caractérisé en ce qu'**il est inclus dans un bloc de résine.

## Patentansprüche

1. Geschlossenes Atmungssystem für Taucher, umfassend ein Atmungs-Mundstück (310), das mit einem Inhalationsschlauch (311) und mit einem Exhalationsschlauch (312) versehen ist, einen Beatmungsbeutel (320), der mit dem Inhalationsschlauch verbunden ist, eine Flasche (340), die Sauerstoff enthält, der durch das Einleiten von Sauerstoff in den Beatmungsbeutel komprimiert wird,
**dadurch gekennzeichnet,**
**dass** das System ferner ein Kohlendioxid-Extraktionssystem (300) umfasst, dessen Einlass (303) mit dem Exhalationsschlauch (312) und dessen Auslass (304) mit dem Beatmungsbeutel (320) verbunden ist, wobei das Kohlendioxid-Extraktionssystem mindestens einen Behälter (10) umfasst, der ein Material (20) enthält, das für die Adsorption des Kohlendioxids geeignet ist, wobei jeder Behälter einen Einlass (13, 113, 213) für das Gemisch und einen Auslass (14, 114, 214) für ein Gemisch aufweist, das zumindest teilweise von Kohlendioxid gereinigt ist, und dass das System ferner umfasst:
- mindestens eine Heizeinrichtung (40, 140, 240) für den Behälter,
- mindestens eine elektronische Steuerschaltung (50, 150), die vorgesehen ist zum Veranlassen der Erwärmung des mindestens einen Behälters, wenn mindestens eine Bedingung erfüllt wird, so dass bewirkt wird, dass das Kohlendioxid ausgetrieben wird, das an dem in dem jeweiligen Behälter enthaltenen Material adsorbiert ist.

2. Atmungssystem nach Anspruch 1,
**dadurch gekennzeichnet, dass** jeder Behälter ferner ein Einlassventil (33, 133, 233) für das Gemisch, ein Auslassventil (34, 134, 234) für das gereinigte Gemisch und ein Auslassventil (35, 135, 235) für das Kohlendioxid aufweist und dass die elektronische Steuerschaltung (50, 150) ausgebildet ist zum Veranlassen des Schließens der Ventile für den Einlass des Gemisches und für den Auslass des gereinigten Gemisches und des Öffnens des Auslassventils für das Kohlendioxid, wenn die Steuerschaltung die Erwärmung eines Behälters veranlasst.

3. Atmungssystem nach einem der Ansprüche 1 oder 2,
**dadurch gekennzeichnet, dass** dieses ferner mindestens eine Messeinrichtung (52, 53) für mindestens einen Parameter umfasst, der die Umgebung charakterisiert, in welcher sich das System befindet, und dass sich die Bedingung auf mindestens einen Umgebungsparameter bezieht.

4. Atmungssystem nach Anspruch 3,
**dadurch gekennzeichnet, dass** diese mindestens eine Messeinrichtung einen Drucksensor (52) und/oder einen Wasseranwesenheits-Sensor (53) umfasst und dass sich die Bedingung auf den Druck und/oder auf die Anwesenheit von Wasser bezieht.

5. Atmungssystem nach einem der Ansprüche 1 oder 2,
**dadurch gekennzeichnet, dass** dieses einen ersten und einen zweiten Behälter (100, 200) umfasst und dass die elektronische Steuerschaltung (150) vorgesehen ist, um in jedem Behälter Zyklen zu bewirken, die eine Adsorptionsphase und eine Desorptionsphase umfassen, wobei die Zyklen gegenphasig sind, so dass sich der eine Behälter in Adsorption befindet, während sich der andere Behälter in Desorption befindet.

6. Atmungssystem nach Anspruch 5,
**dadurch gekennzeichnet, dass** dieses ferner einen Taktgeber umfasst und dass die Phasenänderung erfolgt, wenn die Bedingung einer Zeitdauer erfüllt wird.

7. Atmungssystem nach Anspruch 5,
**dadurch gekennzeichnet, dass** dieses ferner mindestens einen Sensor für die Kohlendioxidkonzentration umfasst und dass die Phasenänderung erfolgt, wenn die Bedingung einer Kohlendioxidkonzentration in dem gereinigten Gemisch erfüllt wird.

8. Atmungssystem nach einem der Ansprüche 5 bis 7,
**dadurch gekennzeichnet, dass** die Adsorptionsphasen (A1, A2) des ersten und des zweiten Behälters eine Überdeckung aufweisen.

9. Atmungssystem nach einem der vorhergehenden Ansprüche,
**dadurch gekennzeichnet, dass** dieses in einem Harzblock eingeschlossen ist.

## Claims

1. Closed circuit breathing system for a diver comprising a breathing end piece (310) fitted with an inhalation pipe (311) and an exhalation pipe (312), a breathing bag (320) connected to said inhalation pipe, a cylinder (340) containing compressed oxygen for introduction of oxygen into said breathing bag
**characterised in that** it also comprises:
a carbon dioxide extraction system (300) the inlet (303) of which is connected to said exhalation pipe (312) and the outlet (304) of which is connected to said breathing bag (320), said system for extraction of carbon dioxide comprising at least one reservoir (10) containing a material (20) capable of adsorbing carbon dioxide, each reservoir being provided with an inlet (13, 113, 213) for said mix and an outlet (14, 114, 214) for a mix from which at least some of the carbon dioxide has been eliminated, and in addition
- at least one means for heating (40, 140, 240) said reservoir,
- at least one electronic control circuit (50, 150), designed to heat at least one reservoir when at least one condition is satisfied, so as to cause desorption of the carbon dioxide adsorbed on the material contained in the corresponding reservoir.

2. System for extraction of carbon dioxide according to claim 1,
**characterised in that** each reservoir also comprises a mix inlet valve (33, 133, 233), a purified mix outlet valve (34, 134, 234) and a carbon dioxide outlet valve (35, 135, 235), and **in that** said electronic control circuit (50, 150) is designed to cause closing of said mix inlet valve and purified mix outlet valve and opening of the carbon dioxide outlet valve when it causes heating of a reservoir.

3. System for extraction of carbon dioxide according to either claim 1 or 2,
**characterised in that** it also comprises at least one means (52, 53) of measuring at least one parameter characterising the environment in which said system is located, and said condition applies to at least one environmental parameter.

4. System for extraction of carbon dioxide according to claim 3,
**characterised in that** the at least one measurement means includes a pressure sensor (52) and/or a water presence sensor (53), and **in that** said condition possibly applies to the pressure and/or presence of water.

5. System for extraction of carbon dioxide according to either claim 1 or 2,
**characterised in that** it comprises a first and a second reservoir (100, 200) and **in that** said electronic control circuit (150) is designed to cause in each reservoir cycles comprising an adsorption period and a desorption period, said cycles being in phase opposition such that one of the reservoirs is in adsorption while the other is in desorption.

6. System for extraction of carbon dioxide according to claim 5,
**characterised in that** it also comprises a clock, and **in that** the period is changed when a duration condition is satisfied.

7. System for extraction of carbon dioxide according to claim 5,
**characterised in that** it also comprises at least one carbon dioxide concentration sensor, and **in that** the change in the period is made when a condition on the concentration of carbon dioxide in the purified mix is satisfied.

8. System for extraction of carbon dioxide according to one of claims 5 to 7,
**characterised in that** the adsorption periods (A1, A2) of the first and the second reservoirs overlap.

9. System for extraction of carbon dioxide according to one of the previous claims,
**characterised in that** it is embedded in a resin block.
